(19) **Europäisches Patentamt**
**European Patent Office**
**Office européen des brevets**

(11) **EP 3 434 361 A1**

(12) **EUROPEAN PATENT APPLICATION**
published in accordance with Art. 153(4) EPC

(43) Date of publication:
**30.01.2019 Bulletin 2019/05**

(51) Int Cl.:
*B01J 20/22* *(2006.01)*     *B01D 53/14* *(2006.01)*
*B01D 53/62* *(2006.01)*     *B01D 53/81* *(2006.01)*
*C08F 283/01* *(2006.01)*

(21) Application number: **17769988.1**

(22) Date of filing: **10.03.2017**

(86) International application number:
**PCT/JP2017/009813**

(87) International publication number:
**WO 2017/163944 (28.09.2017 Gazette 2017/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.03.2016 JP 2016060467**

(71) Applicant: **Osaka Gas Co., Ltd.**
**Osaka-shi, Osaka 541-0046 (JP)**

(72) Inventors:
• **UEDA Kentaro**
  **Osaka-shi**
  **Osaka 541-0046 (JP)**
• **KISHIMOTO Akira**
  **Osaka-shi**
  **Osaka 541-0046 (JP)**
• **OSHIMA Junji**
  **Osaka-shi**
  **Osaka 550-0023 (JP)**

(74) Representative: **Lemcke, Brommer & Partner**
**Patentanwälte Partnerschaft mbB**
**Siegfried-Kühn-Straße 4**
**76135 Karlsruhe (DE)**

(54) **CARBON DIOXIDE ABSORBER AND PROCESS FOR PRODUCING CARBON DIOXIDE ABSORBER**

(57)     A carbon dioxide sorbent characterized in that carbon dioxide sorbing material incorporated in pores of the porous inorganic particles is sealed in the pores with a resin.

EP 3 434 361 A1

**Description**

**Technical Field:**

The present invention relates to a carbon dioxide sorbent and a method for producing such sorbent.

**Background Art**

Conventionally, porous fine particles encapsulating or sorbing functional substances such as pigments, perfumes, agrichemicals and the like have been used for various purposes. As an example of such porous fine particles, there has been proposed a porous fine particle characterized in that the particle encapsulates a substance to be supported and has its surface coated with a curable compound or a high molecular compound to hold therein the supported substance, the supported substance being released when triggered by a particular external factor (see Patent Document 1).

**Background Art Document**

**Patent Document**

Patent Document 1: Japanese Unexamined Patent Application Publication No. 2009-12996
Patent Document 1: JP-A-2009-12996

**Summary of the invention**

**Problem to be Solved by Invention**

In recent years, the increasing carbon dioxide concentration in the atmosphere has been seen as a problem as one cause of the global warming. In particular, for such large-scale facilities as thermal power plants, steelworks blast furnaces that emit large amounts of carbon dioxide, reduction in the carbon dioxide emission amounts is being required.
On the other hand, the conventional porous fine particles such as that described in the above-mentioned Patent Document 1 or the like are intended to provide, when subjected to a predetermined external factor, their expected function through speedy release of the encapsulated or sorbed functional substance to the outside, not intended to cause the porous fine particles per se to sorb carbon dioxide.
An object of the present invention is to provide a novel carbon dioxide sorbent which can be applied also to large-scale facilities etc. having a large amount of carbon dioxide emissions.

**Solution**

A carbon dioxide sorbent of the present invention is characterized in that carbon dioxide sorbing material incorporated in pores of porous inorganic particle is sealed within the pores with a resin.
The carbon dioxide sorbent of the above arrangement sorbs carbon dioxide by the carbon dioxide sorbing material incorporated in numerous pores in the porous inorganic particles. Thus, carbon dioxide can be sorbed very efficiently. Moreover, since the carbon dioxide sorbent of this arrangement is a solid, it is easy to handle as compared with a liquid form. Therefore, it is also possible to apply the carbon dioxide sorbent of the present arrangement to, e.g. a carbon dioxide separation recovery apparatus installed in a large-scale facility such as a thermal power plant, etc., and separation and recovery operation of a large amount of carbon dioxide can be carried out efficiently.
A further characteristic feature of the carbon dioxide sorbent of the present invention resides in that the carbon dioxide sorbing material is an ionic liquid.
By using an ionic liquid as a carbon dioxide sorbing material as in the above arrangement, carbon dioxide can be more efficiently sorbed.
A further characteristic configuration of the carbon dioxide sorbent of the present invention is that the ionic liquid is tetraethylphosphonium benzimidazolide or tetraethylammonium imidazolide.
Tetraethyl phosphonium benzimidazolide and tetraethylammonium imidazolide is ionic liquid that undergoes a phase change from solid to liquid at the time of sorption of carbon dioxide and a phase change from liquid to solid at the time of release of carbon dioxide. So, utilization of latent heat of the phase change is possible. For instance, in case the carbon dioxide sorbent according to the present invention is applied to a carbon dioxide separation recovery apparatus to be installed in large-scale facilities for thermal power plants and the like, after the inventive carbon dioxide sorbent has sorbed carbon dioxide, it is necessary to heat it to cause the carbon dioxide to be released therefrom. In the course of this, by using the latent heat of the phase change as a part of regeneration heat, regeneration heat can be reduced.

A further characteristic feature of the carbon dioxide sorbent of the present invention resides in that the resin is a cured product obtained by curing a vinyl monomer solution of a curable resin.

With such vinyl monomer solution of a curable resin, since the curable resin and the vinyl monomer all undergo polymerization reaction to be crosslinked and cured, no volatile substances derived from a solvent are generated. Moreover, since no by-products are generated, the environmental load is low. Further, unlike the method disclosed in Patent Document 1, the vinyl monomer solution does not contain any solvent, so it is unnecessary to take health protection measures due to the solvent.

A further characteristic feature of the carbon dioxide sorbent of the present invention is that the vinyl monomer solution is at least one selected from the group consisting of unsaturated polyester resin, epoxy acrylate resin and urethane acrylate resin.

When the vinyl monomer solution is selected from the group consisting of an unsaturated polyester resin, an epoxy acrylate resin and a urethane acrylate resin, this is advantageous from a viewpoint of cost and a resin with various performances can be obtained.

A further characteristic feature of the carbon dioxide sorbent of the present invention resides in that the vinyl monomer solution is an unsaturated polyester resin.

When the vinyl monomer solution is an unsaturated polyester resin, this is more advantageous from the viewpoint of cost, and a resin having an even greater variety of performances can be obtained.

A further characteristic feature of the carbon dioxide sorbent of the present invention lies in that the ratio of the volume of the resin to the oil sorptive capacity of the porous inorganic particle is 0.3 or more.

According to the above arrangement, the porous inorganic particles can incorporate a sufficient amount of the resin, whereby the carbon dioxide sorbing material can be sealed within the pores of the porous inorganic particles in a reliable manner.

A further characteristic feature of the carbon dioxide sorbent of the present invention lies in that the ratio of the total volume of the carbon dioxide sorbing material and the resin to the oil sorptive capacity of the porous inorganic particle is 0.7 or less.

According to the above arrangement, it is possible to prevent adjacent porous inorganic particles from sticking or adhering to each other, so that the plurality of porous inorganic particles can secure excellent fluidity.

A further characteristic feature of the carbon dioxide sorbent of the present invention lies in that the ratio of the total volume of the carbon dioxide sorbing material and the resin to the oil sorptive capacity of the porous inorganic particles exceeds 0.5.

According to the above arrangement, the carbon dioxide sorbing material and the resin can be included in the porous inorganic particles in a sufficient amount.

A further characteristic feature of the carbon dioxide sorbent of the present invention lies in that the ratio of the total mass of the carbon dioxide sorbing material and the resin to the mass of the porous inorganic particle is 1.5 or more.

According to the above arrangement, the carbon dioxide sorbent can contain a sufficient amount of carbon dioxide sorbing material and resin as suited for a contemplated purpose.

A further characteristic feature of the carbon dioxide sorbent of the present invention lies in that the ratio of the mass of the carbon dioxide sorbing material to the mass of the resin is 2.0 or less.

According to the above arrangement, since the carbon dioxide sorbing material is reliably sealed within the pores of the porous inorganic particles with a sufficient amount of the resin, leakage of the carbon dioxide sorbing material out of the pores of the porous inorganic particles can be suppressed.

A further characteristic feature of the carbon dioxide sorbent of the present invention resides in that the carbon dioxide sorbing material is a water insoluble component.

A further characteristic feature of the carbon dioxide sorbent of the present invention resides in that the carbon dioxide sorbing material is a water soluble component.

A characteristic feature of the method for producing a carbon dioxide sorbent according to the present invention resides in that the method comprises the steps of: incorporating a carbon dioxide sorbing material into pores of porous inorganic particles; and sealing the carbon dioxide sorbing material within the pores with a resin.

According to the above arrangement, it is possible to manufacture a carbon dioxide sorbent that can be applied to a carbon dioxide separation recovery apparatus installed in a large-scale facility such as a thermal power plant, since this sorbent has a high carbon dioxide sorption performance and also it is solid and easy to handle,

A further characteristic configuration of the method for producing a carbon dioxide sorbent of the present invention resides in that the carbon dioxide sorbing material is an ionic liquid.

According to the above arrangement, it is possible to produce a carbon dioxide sorbent having even higher carbon dioxide sorption performance.

A further characteristic feature of the method for producing a carbon dioxide sorbent of the present invention is that the ionic liquid is tetraethylphosphonium benzimidazolide or tetraethylammonium imidazolide.

According to the above arrangement, it is possible to produce a carbon dioxide sorbent capable of reducing regeneration heat for regeneration by releasing sorbed carbon dioxide therefrom.

A further characteristic feature of the method for producing a carbon dioxide sorbent of the present invention is characterized by the steps of: blending a liquid containing the carbon dioxide sorbing material to the porous inorganic particles in such a manner that the ratio of the volume of the liquid relative to the oil sorptive capacity of the porous inorganic particles is 0.7 or less, thus incorporating the carbon dioxide sorbing material within pores of the porous inorganic particles; blending a vinyl monomer solution of a curable resin as the resin to the porous inorganic particles in such a manner the ratio of the total volume of the carbon dioxide sorbing material and the vinyl monomer solution to the oil sorptive capacity of the porous inorganic particles is 0.7 or less, thus incorporating the vinyl monomer solution within the pores of the porous inorganic particles; and curing the vinyl monomer solution to seal the carbon dioxide sorbing material in the pores.

According to the arrangement, the vinyl monomer solution of the curable resin is blended into the porous inorganic particles, whereby the vinyl monomer solution is incorporated into the pores of the porous inorganic particles in which the carbon dioxide sorbing material has been incorporated; thereafter, the vinyl monomer solution is cured. Therefore, unlike Patent Document 1, there is no need for the step of removing an organic solvent and all of the vinyl monomer solution in the pores is cured to form a cured product. As a result, it is possible to secure a large volume (Vr) of the resin in the pores. Accordingly, such resin can reliably seal a sufficient amount of the carbon dioxide sorbing material in the porous inorganic particles.

Moreover, in the vinyl monomer solution of the curable resin, all of the curable resin and the vinyl monomer undergo a polymerization reaction to crosslink and harden. So, there are generated no volatile substances derived from a solvent or there are generated no by-products, either. Thus, the environment load is low. Moreover, unlike the method described in Patent Document 1, the vinyl monomer solution does not contain any solvent, so it is not necessary to take health protection measures due to the solvent.

Further, if the ratio of the volume of the liquid containing the carbon dioxide sorbing material to the oil sorptive capacity of the porous inorganic particles exceeds 0.7, part of the carbon dioxide sorbing material will be positioned on the surface of the porous inorganic particle inadvertently, not being incorporated into the porous inorganic particles. However, with the inventive arrangement, since the ratio of the volume of the liquid containing the carbon dioxide sorbing material to the oil sorptive capacity of the porous inorganic particles is set 0.7 or less, the carbon dioxide sorbing material is disposed inside the porous inorganic particles, so that it can be encapsulated in the porous inorganic particles in a reliable manner.

A further characteristic feature of the process for producing a carbon dioxide sorbent of the present invention resides in that the viscosity of the vinyl monomer solution at 23°C is 100 mPa ·s or less.

According to the above arrangement, uptake of the vinyl monomer solution into the pores of the porous inorganic particles can be carried out in a short time, without lowering the sorption rate (uptake rate) of the vinyl monomer solution into the pores of the porous inorganic particles. Further, the vinyl monomer solution can be incorporated within the pores sufficiently, thus suppressing the phenomenon of it remaining on the surface of the porous inorganic particles.

A further characteristic configuration of the method for producing a carbon dioxide sorbent according to the present invention resides in that the vinyl monomer solution of the curable resin is a thermosetting resin composition and the thermosetting resin composition has a room temperature gelling time of 10 minutes or more measured in accordance with JIS K 6901-A method (2008).

According to the above arrangement, the thermosetting resin can be reliably taken into the pores of the porous inorganic particle before the thermosetting resin composition is cured.

A further characteristic configuration of the method for producing a carbon dioxide sorbent according to the present invention resides in that the vinyl monomer solution of the curable resin is a thermosetting resin composition and the thermosetting resin composition has a room temperature gelling time not more than 1 hour measured in accordance with JIS K 6901-A method (2008).

According to the above arrangement, it is possible to prevent the phenomenon that the carbon dioxide sorbing material incorporated into the pores of the porous inorganic particle elutes into the vinyl monomer contained in the vinyl monomer solution and subsequently migrates to the surface of the porous inorganic particle.

On the other hand, according to the methods described in Examples 3, 4 and 7 of Patent Document 1, etc., since the methyl ketone solution of the epoxy resin is heated for a time of room temperature gelling time of 1 hour or more, in the course of which the supported substance will elute into the methyl ketone and migrate subsequently to the surface of the silica fine particles. On the other hand, according to the inventive arrangement above, since the thermosetting resin is thermally cured in a short time, elution of the carbon dioxide sorbing material into the vinyl monomer can be prevented. Then, the thermosetting resin composition can be cured speedily and with high crosslinking density.

## Modes of Embodying Invention

### [Embodiment]

Next, a method for producing a carbon dioxide sorbent and the carbon dioxide sorbent relating to the instant embodiment will be described. The carbon dioxide sorbent of the present embodiment is characterized in that carbon dioxide sorbing material incorporated in pores of porous inorganic particles is sealed within the pores with a resin. Hereinafter, such porous inorganic particles, carbon dioxide sorbing material, resin, manufacturing method, and their possible applications will be described.

### (Porous Inorganic Particles)

Examples of inorganic substance forming the porous inorganic particle include a silicate, a phosphate, an oxide, and the like. Examples of the silicate include calcium silicate, barium silicate, magnesium silicate, zeolite and the like. As the phosphate, for example, calcium phosphate, barium phosphate, magnesium phosphate, zirconium phosphate, apatite and the like can be cited. As the oxide, for example, silicon oxide such as silicon dioxide and silicon monoxide, alumina and the like can be cited. Preferably it is an oxide, more preferably silicon oxide, still more preferably silicon dioxide.

The porous inorganic particle has a spherical shape including a true spherical shape, or an irregular shape. Porous inorganic particles are generally aggregates of secondary particles or the like in which primary particles are agglomerated with each other.

When the porous inorganic particles are composed of silicon dioxide and have an irregular shape, they will be produced by e.g. a wet process, a dry process, or the like. Preferably, they are produced by the wet process. In the wet process, there are a sedimentation process and a gel process, in which silicon dioxide is generated by neutralizing water glass (an aqueous sodium silicate solution) with a mineral acid such as sulfuric acid. In the sedimentation process, with progress of a neutralization reaction under a high temperature condition and in an alkaline pH range, the growth of primary particles of silicon dioxide proceeds rapidly, causing the primary particles to settle in floc form. In the gel process, by with progress of a neutralization reaction in an acidic pH range, agglomeration is carried out in a state where the growth of the primary particles is suppressed, and the whole reaction solution is converted into a single floc of gel by a three-dimensional mesh-like structure. The gel process is preferable because of smaller primary particles and a larger pore volume than the sedimentation process.

In case where the porous inorganic particles are composed of silicon dioxide and have a true spherical shape, they will be produced through generation of silicon dioxide by the wet process in water phase droplets of a desired size dispersed and stabilized in an inert solvent such as a hydrocarbon.

Further, the pores of the porous inorganic particles mean the pores inside the primary particles forming the porous inorganic particles as well as the voids or gaps present between the primary particles.

The pore volume of the porous inorganic particles means the total volume (mL) of pores per unit mass (g) in the primary particles forming the porous inorganic particles and can be measured by a nitrogen gas sorption method. The pore volume (the total volume of the pores of the primary particles) of the porous inorganic particles is e.g. 1.0 mL/g or more, preferably 1.5 mL /g or more, and e.g. 3.0 mL /g or less.

The specific surface area of the porous inorganic particles is e.g. 150 $m^2$/g or more, preferably 300 $m^2$/g or more, and e.g. 1000 $m^2$/g or less. The specific surface area is measured by the simple BET method.

The oil sorption amount of the porous inorganic particles is a total volume (mL) of the pore volume inside the primary particles forming the porous inorganic particles, the void volume between the primary particles, and the minimum capacity of the oil wetting the surface of the secondary particles, per 100 g of the porous inorganic particles. The oil sorption amount is measured according to JIS K 5101-13-2 (2004). The oil sorption amount of the porous inorganic particles is e.g. 100 mL /100 g or more, preferably 250 mL/100 g or more, and e.g. 500 mL /100 g or less.

The average value (the average particle size in case they have a spherical shape) of the maximum length of the porous inorganic particles is 0.5 $\mu$m or more, preferably 1 $\mu$m or more, more preferably 2 $\mu$m or more, and e.g. 50 $\mu$m or less, preferably 30 $\mu$m or less.

### (Carbon Dioxide Sorbing Material)

Examples of the carbon dioxide sorbing material include a carbonate aqueous solution, an ammonia aqueous solution, an amine compound, an ether compound, an amino acid, an ionic liquid, a chloride or an aqueous solution thereof, a bromide or an aqueous solution thereof, and a water sorbent polymer. As the carbonate aqueous solution, for example, a potassium carbonate aqueous solution and the like can be cited. Examples of the amine compound include monoethanolamine, N-methyldiethanolamine, piperazine and the like. As the ether compound, for example, tetrahydrofuran, ethylene glycol dimethyl ether and the like can be mentioned. Ionic liquids include, for example, 1-butyl-3-methylimidazolium bis (trifluoromethanesulfonyl) amide, tetraethylphosphonium benzimidazolide, tetraethylammonium imidazolide and the like. As the chloride, for example, calcium chloride, lithium chloride and the like can be cited. As the bromide, for example, lithium bromide and the like can be cited. As the water-sorbing polymer, for example, sodium polyacrylate and the like can be cited. The carbon dioxide sorbing material is preferably an ionic liquid, more preferably tetraethylphosphonium benzimidazolide or tetraethylammonium imidazolide.

**(Resin)**

The resin is a cured product obtained by curing a vinyl monomer solution of a low molecular weight polymer (hereinafter referred to as "curable resin") containing a plurality of vinyl polymerization reactive double bonds in the molecule.

The vinyl monomer solution is a curable resin composition in which a curable resin is dissolved with a liquid vinyl monomer at room temperature (25 °C), preferably a curable resin and a vinyl monomer alone, and does not contain any nonreactive solvent such as of a ketone type such as methyl ethyl ketone.

The curable resin composition is vinyl polymerizable. Depending on selections of an polymerization initiator to be described later and a polymerization promoter to be also described later, the curable resin composition will be made into a room-temperature curing type thermosetting resin composition, or a high temperature curing type thermosetting resin composition, or an active energy ray curable type resin composition such as ultraviolet ray, an electron beam, etc.

Examples of the curable resin include unsaturated polyester, epoxy (meth) acrylate, urethane (meth) acrylate and the like. Preferably, an unsaturated polyester is cited from the viewpoint of cost advantage and possibility of obtaining resins having a variety of performances. Examples of the active energy ray-curable resin include urethane (meth) acrylate and the like. As the thermosetting resin, an unsaturated polyester is cited preferably.

The unsaturated polyester is obtained by condensation polymerization of a dibasic acid component containing an unsaturated dibasic acid and a dihydric alcohol (diol) component.

Specific examples of the unsaturated dibasic acid include a, β-unsaturated dibasic acids such as maleic acid, fumaric acid, methylfumaric acid (mesaconic acid), methylmaleic acid (citraconic acid), aconitic acid, itaconic acid and the like. As the unsaturated dibasic acid, an anhydride of the above-mentioned a, β-unsaturated dibasic acid (concretely, maleic anhydride, citraconic anhydride, etc.) can also be cited. These can be used alone, or two or more kinds thereof can be used in combination. Preferable examples of the unsaturated dibasic acid include fumaric acid and maleic anhydride, more preferably maleic anhydride.

The content ratio of the unsaturated dibasic acid in the dibasic acid component is e.g. 20% or more, preferably 40% or more, and e.g. 80% or less, preferably 60% or less, on the molar basis.

The dibasic acid component may contain a saturated dibasic acid in addition to the above unsaturated dibasic acid. Specific examples of the saturated dibasic acid include phthalic anhydride, isophthalic acid, terephthalic acid, tetrahydrophthalic anhydride, tetrachlorophthalic anhydride, 3,6-endomethylenetetrahydrophthalic anhydride (anhydrous nadic acid), adipic Acid, pimelic acid, suberic acid, azelaic acid, sebacic acid and the like. The saturated dibasic acid is preferably phthalic anhydride or adipic acid, more preferably phthalic anhydride. From the viewpoint of lowering the viscosity of the unsaturated polyester resin or making the cured product flexible, it will be effective to select saturated fatty acid dicarboxylic acid or the like having 6 or more and 10 or less carbon atoms such as adipic acid, pimelic acid, suberic acid, azelaic acid, sebacic acid.

The content ratio of the saturated dibasic acid in the dibasic acid component is 20% or more, preferably 40% or more, and e.g. 80% or less, preferably 60% or less, on the molar basis. The content ratio of the saturated dibasic acid to 100 mol parts of the unsaturated dibasic acid is e.g. 50 mol parts or more, preferably 75 mol parts or more, and e.g. 150 mol parts or less, preferably 125 mol part or less .

Examples of the dihydric alcohol component include ethylene glycol, propylene glycol, 1,3-butylene glycol, 1,4-butylene glycol, diethylene glycol, dipropylene glycol, neopentyl glycol, 2,2-bis (4-hydroxycyclohexyl) propane (hydrogenated bisphenol A), bisphenol A propylene oxide adduct, bisphenol A ethylene oxide adduct, and the like. From the viewpoint of softening the cured product, propylene glycol and diethylene glycol are preferred. These dihydric alcohol components may be used alone, or two or more of them may be used in combination, but a combination of propylene glycol and diethylene glycol is preferred.

The unsaturated polyester is obtained by mixing the above-mentioned dibasic acid component and the above-mentioned dihydric alcohol component, so that e.g. the molar ratio of the dihydric alcohol component to the dibasic acid component is 1.00 or more and 1.10 or less and then subjected to a condensation polymerization by heating. The reaction temperature is e.g. 180°C or more and 220 °C or less. The reaction time is e.g. 3 hours or more and 20 hours or less.

In the above-described condensation polymerization of the dibasic component and the dihydric alcohol component, in order to inhibit the addition polymerization (vinyl polymerization) of the unsaturated dibasic acid, it is preferable that a polymerization inhibitor (first polymerization inhibitor) be added to the mixture of the dibasic acid component and the dihydric alcohol component.

Examples of the polymerization inhibitor include a hydroquinone compound, a benzoquinone compound, a catechol compound, a phenol compound, phenothiazine, copper naphthenate and the like. Examples of the hydroquinone compound include hydroquinone, methyl hydroquinone, and the like. As the benzoquinone compound, benzoquinone, methyl-p-benzoquinone and the like can be mentioned. As the catechol compound, e.g. t-butyl catechol and the like can be mentioned for example.

Examples of the phenol compound include 2,6-di-t-butyl-4-methylphenol, 4-methoxyphenol (hydroquinone methyl ether) and the like. These can be used alone or in combination of two or more. A preferred polymerization inhibitor is hydroquinone.

The addition ratio of the polymerization inhibitor is e.g. 1 ppm or more, preferably 10 ppm or more, and e.g. 100 ppm or less, based on the mass of the mixture of the dibasic acid component and the dihydric alcohol component.

Incidentally, the unsaturated polyester can also be obtained by, for example, ring-opening polymerization. Specifically, such ring-opening polymerization can be carried out, with using a polyhydric alcohol as an initiator, if needed in combination with a polymerization catalyst, and using maleic anhydride as an essential component as a dibasic acid component, an acid anhydride such as phthalic anhydride, tetrahydrophthalic anhydride or the like, and using propion oxide, ethylene oxide, butylene oxide, styrene oxide, epichlorohydrin as a monomer as a dihydric alcohol component. Furthermore, the polymer obtained by ring-opening polymerization may be produced also with enhancement of its degree of polymerization through condensation polymerization.

The acid value of the unsaturated polyester is e.g. 5 [mg KOH/g] or more, preferably 10 [mg KOH/g] or more, and 80 [mg KOH/g] or less, preferably 40 [mg KOH/g] or less. The acid value of the unsaturated polyester is measured in accordance with JIS K 6901-A method (2008).

Epoxy (meth) acrylate is also referred to as vinyl ester. The epoxy (meth) acrylate can be obtained, for example, by the following method (1) or method (2). In the method (1), a bisphenol type epoxy resin is reacted with an unsaturated carboxylic acid such as (meth) acrylic acid (i.e. acrylic acid and/or methacrylic acid) in the presence of a catalyst such as a tertiary amine; and by opening the epoxy ring with a carboxyl group, an ester bond is formed. In the method (2), for example, the carboxyl group terminal of the unsaturated oligoester is reacted with the epoxy group of the epoxy group-containing acrylate such as glycidyl (meth) acrylate in the presence of a catalyst such as tertiary amine Then, the epoxy ring is opened with a carboxyl group to introduce an ester bond.

The urethane (meth) acrylate is obtained by reacting a diisocyanate such as isophorone diisocyanate with a hydroxy group of a hydroxy group-containing (meth) acrylate such as 2-hydroxyethyl methacrylate in the presence of a catalyst such as dibutyltin dilaurate And is an oligomer containing a urethane bond and an ester bond.

As the vinyl monomer, a monomer which is liquid at room temperature and has the property of performing addition polymerization by radical initiation (vinyl polymerization) is selected. Further, the vinyl monomer dissolves the curable resin to lower the viscosity and has properties as a crosslinking agent that vinyl copolymerizes with the unsaturated double bond of the curable resin. Examples of such vinyl monomers include monofunctional vinyl monomers such as styrene type monomers and (meth) acrylate type monomers, and preferably styrene type monomers. Specific examples of the styrenic monomer include styrene, methylstyrene ($\alpha$-methylstyrene, $\beta$-methylstyrene), tert-butylstyrene, chlorostyrene (o-chlorostyrene, m-chlorostyrene, p-chlorostyrene) and the like. Examples of the (meth) acrylic acid ester type monomer include methyl (meth) acrylate, ethyl (meth) acrylate, isopropyl (meth) acrylate, butyl (meth) acrylate, 2-hydroxyethyl (meth) acrylate methylate, and the like. These vinyl monomers can be used alone or in combination of two or more.

The mixing ratio of the vinyl monomer is e.g. 30 parts by mass or more, preferably 70 parts by mass, and e.g. 150 parts by mass or less, preferably 130 parts by mass or less with respect to 100 parts by mass of the curable resin. The mixing ratio of the vinyl monomer is e.g. 35% by mass or more, more preferably 51% by mass or more, and e.g. 55% by mass or less and preferably, 53% or less by mass, with respect to the total amount (amount of the resin) of the curable resin and the vinyl monomer.

When the mixing ratio of the vinyl monomer is not less than the above-mentioned lower limit, the viscosity of the curable resin composition can be reduced and the curable resin composition is rapidly sorbed/supported in the pores of the porous inorganic particles. On the other hand, if the mixing ratio of the vinyl monomer is not more than the above upper limit, a resin (cured product) having a high crosslink density can be obtained.

The vinyl monomer solution of the curable resin is prepared by mixing the above-mentioned curable resin and vinyl monomer at the above-mentioned ratio. Specifically, in the production of the curable resin, after completion of the reaction, cooling is carried out to prepare a curable resin having sufficient fluidity and injected into a separately prepared vinyl monomer under stirring ("hot dilution"). In the production of the curable resin, it may be prepared by a method of cooling to room temperature after completion of the reaction, injecting a vinyl monomer into a highly viscous curable resin and dissolving it ("cold dilution").

Incidentally, when the curable resin is an unsaturated polyester, the vinyl monomer solution of the curable resin is an unsaturated polyester resin. When the curable resin is epoxy (meth) acrylate, the vinyl monomer solution of the curable resin is epoxy acrylate resin. And, when the curable resin is urethane (meth) acrylate, the vinyl monomer solution of the curable resin is a urethane acrylate resin.

Further, the unsaturated polyester resin can be prepared by the above-described method, but a commercially available product may be used instead. Such commercially available unsaturated polyester resin can be selected from among polyhope series of Japan Composite Co., Ltd., Sundome series of DIC Materials Co., Ltd., Rigolac series of Showa Denko Co., etc. that allows adjustment of predetermined physical properties thereof described below, with reference to its physical property values indicated in the product test chart, composition analysis values obtained by NMR and the like. Likewise, as the epoxy acrylate resin, Neopole series manufactured by Nippon Yupika Co., Ltd., vinyl ester series manufactured by DIC Materials Co., Ltd., and the like can be used. Examples of urethane acrylate include UPICA series manufactured by Japan UPICA Corporation.

The obtained curable resin composition is adjusted so as to obtain room temperature gelling time and viscosity suitable for the use of this embodiment. Next, explanation will be made by taking as an example the case of an unsaturated polyester resin which is a room temperature curable thermosetting resin composition.

First, the sorption rate (the rate of incorporation into the pores) of the unsaturated polyester resin to the porous inorganic particles needs to be sufficiently high. For this purpose, the viscosity of the unsaturated polyester resin at 23 °C is adjusted to, for example, 100 mPa · s or less, preferably 70 mPa · s or less.

The viscosity of the vinyl monomer solution is measured by a BM type viscometer. When the viscosity of the unsaturated polyester resin falls within the above range, incorporation of the vinyl monomer solution can be carried out in a short time without lowering the rate of incorporation of the unsaturated polyester resin into the pores of the porous inorganic particles, Further, by sufficiently incorporating the vinyl monomer solution into the pores, it is possible to suppress the phenomenon of it remaining on the surface of the porous inorganic particles.

Adjustment of the viscosity is carried out by post-addition of the vinyl monomer. As described above, the total amount of the vinyl monomer is e.g. 55% by mass or less, preferably 53% by mass or less, based on the total amount of the unsaturated polyester resin.

Next, the room temperature gelling time in room temperature curing is adjusted. The room temperature gelling time is measured in accordance with JIS K 6901-A method (2008). The room temperature gelling time is adjusted to e.g. 10 minutes or more, preferably 20 minutes or more, and to e.g. 2 hours or less, preferably 1 hour or less.

If the room temperature gelling time of the unsaturated polyester resin is not lower than the above-mentioned lower limit, at step (2) to be described later, before the unsaturated polyester resin is cured, the unsaturated polyester resin is reliably present within the pores of the porous inorganic particle. Namely, when the room temperature gelling time of the unsaturated polyester resin is less than the lower limit described above, curing of the unsaturated polyester resin is started before the unsaturated polyester resin is incorporated into the pores of the porous inorganic particles, so the unsaturated polyester resin may not be reliably incorporated into the pores of the porous inorganic particles.

On the other hand, if the room temperature gelling time of the unsaturated polyester resin is equal to or less than the above-mentioned upper limit, at step (2), it is possible to prevent the phenomenon that the carbon dioxide sorbing material taken into the pores of the porous inorganic particles contained in the vinyl monomer solution elutes into the vinyl monomer and subsequently migrates to the surface of the porous inorganic particle. On the other hand, in the case of the method described in Examples 3, 4, 7, etc. of Patent Document 1, the methyl ketone solution of the epoxy resin is heated for a time longer than the above-mentioned upper limit. Thus, in the course of this, the supported substance will elute into methyl ethyl ketone and subsequently migrate to the surface of the silica fine particles.

When the room temperature gelling time of the unsaturated polyester resin is not more than the above-mentioned upper limit, the unsaturated polyester resin can be cured even more rapidly and with even higher crosslinking density at step (3) to be described later.

The room-temperature curing type unsaturated polyester resin is prepared by mixing a polymerization promoter, or, when needed, a polymerization promoter aid in combination with a polymerization retarder ("second polymerization inhibitor") in the unsaturated polyester resin. Examples of the polymerization promoter include oxidizing metal soaps such as cobalt octylate and cobalt naphthenate. Examples of the polymerization promoter aid include aromatic amines such as dimethylaniline and carbonyl compounds such as acetylacetone. Examples of the polymerization retarder include hydroquinone methyl ether, hydroquinone and the like.

The adjustment of the room temperature gelling time can be carried out as follows, for example.

In accordance with JIS K 6901-A method (2008), a predetermined amount of a polymerization promoter and, if needed, a predetermined amount of a polymerization promoter aid is/are blended in a predetermined amount of the unsaturated polyester resin, and then an initiator (methyl ethyl ketone peroxide) is blended and the gelling time at room temperature is measured. At the same time, several different amounts of polymerization retarders ("second polymerization inhibitor") are mixed in the blended resin and the gelling time at room temperature is measured. Examples of the polymerization retarder (second polymerization inhibitor) include those exemplified as the first polymerization inhibitor. The amount of the polymerization retarder (second polymerization inhibitor) is e.g. 5 ppm or more and 1000 ppm or less based on the mass of the vinyl monomer as the active ingredient. The relationship between the amount of the polymerization retarder (second polymerization inhibitor) and the room temperature gelling time is represented by a graph, and the amount of the polymerization retarder (second polymerization inhibitor) corresponding to the desired room temperature gelling time is obtained. Thereafter, a predetermined amount of a polymerization promoter and, if needed, a polymerization promoter aid and a polymerization retarder (second polymerization inhibitor) in the amount obtained as described above are blended with respect to the unsaturated polyester resin described above, thus preparing an unsaturated polyester resin with controlled room temperature gelling time and viscosity.

In this embodiment, the polymerization promoter has a standard formulation that 6% cobalt naphthenate or 8% cobalt octylate is mixed with the unsaturated polyester resin in an amount of 0.5% by mass and no weight promoter aid is added. As regards the polymerization initiator, a method of mixing 1.0% by mass of 55% methyl ethyl ketone peroxide and measuring a room temperature gelling time is defined as the standard measurement method.

**(Producing Method)**

A method for producing a carbon dioxide sorbent of the instant embodiment is characterized by a step of introducing a carbon dioxide sorbing material into pores of porous inorganic particles and a step of sealing the carbon dioxide sorbing material in the pores with a resin In this embodiment, a method for producing a carbon dioxide sorbent including the following steps (1) to (3) will be described.

The method for producing a carbon dioxide sorbent according to the instant embodiment includes: step (1) of blending a liquid containing the carbon dioxide sorbing material to the porous inorganic particles in such a manner that a ratio (V1/Voa) of the volume (V1) of the liquid relative to the oil sorptive capacity (Voa) of the porous inorganic particles is 0.7 or less, thus incorporating the carbon dioxide sorbing material within pores of the porous inorganic particles; step (2) of blending a vinyl monomer solution of a curable resin as the resin to the porous inorganic particles in such a manner a ratio ((Vf+Vr)/(Voa)) of the total volume (Vf+Vr) of the carbon dioxide sorbing material and the vinyl monomer solution to the oil sorptive capacity (Voa) of the porous inorganic particles is 0.7 or less, thus incorporating the vinyl monomer solution within the pores of the porous inorganic particles; and step (3) of curing the vinyl monomer solution to seal the functional components in the pores.

At the above step (1), a liquid containing a carbon dioxide sorbing material is prepared. When the carbon dioxide sorbing material is liquid at room temperature, the carbon dioxide sorbing material is used as it is as a liquid.

Preferably, if the viscosity of the carbon dioxide sorbing material at 23 °C is 100 mPa · s or less, the carbon dioxide sorbing material is used as it is as a liquid. The method of measuring the viscosity is the same as the above-described method of measuring the viscosity of the vinyl monomer solution.

On the other hand, if the viscosity of the carbon dioxide sorbing material at 23 °C exceeds 100 mPa · s, the carbon dioxide sorbing material will be diluted with a solvent to be described below to prepare a solution having 23°C viscosity of e.g. 100 mPa · s or less, preferably, 70 mPa · s or less.

If the carbon dioxide sorbing material is semi-solid or solid at the normal temperature, a solution of carbon dioxide sorbing material will be prepared. Preferably, a solution having a viscosity at 23 °C of 100 mPa · s or less, preferably 70 mPa · s or less will be prepared. Specifically, if the carbon dioxide sorbing material is semisolid or solid at room temperature, a solution will be prepared by dissolving the carbon dioxide sorbing material in a solvent.

If the carbon dioxide sorbing material is water insoluble, an organic solvent will be used as a solvent. Whereas, if the carbon dioxide sorbing material is water soluble, water will be used as a solvent.

Examples of the organic solvent include aliphatic hydrocarbons, aromatic hydrocarbons, halogenated hydrocarbons, esters, ketones, alcohols, ethers and the like. As examples of the aliphatic hydrocarbons, hexane, cyclohexane, heptane, octane and the like can be cited.

Examples of the aromatic hydrocarbons include benzene, toluene, xylene and the like. Examples of halogenated hydrocarbons include dichloroethane, trichloroethane and the like. Examples of the esters include ethyl acetate, butyl acetate and the like. Examples of ketones include acetone, methyl ethyl ketone, methyl isobutyl ketone, and the like. Examples of alcohols include methanol, ethanol, propanol, isopropanol and the like. Examples of the ethers include 1,4-dioxane, tetrahydrofuran and the like. These organic solvents can be used alone or in combination of two or more. Preferred organic solvents are ketones and alcohols.

The mixing ratio of the solvent and the carbon dioxide sorbing material is adjusted so that the viscosity of the solution at 23 °C is preferably 100 mPa · s or less, more preferably 70 mPa · s or less. Specifically, the mixing ratio of the carbon dioxide sorbing material is preferably 30 mass% or more, preferably 50 mass% or more, and e.g. 80 mass% or less, with respect to the total amount of the solvent and the carbon dioxide sorbing material. In these ways, the mixing ratio of the solvent and carbon dioxide sorbing material will be adjusted.

Next, a liquid containing a carbon dioxide sorbing material is added to the porous inorganic particles. Specifically, for example, porous inorganic particles are weighed into a sealed vessel equipped with a stirrer, and a liquid containing a carbon dioxide sorption material is dropped under stirring. In this, the total volume of the volume (Vf) of the carbon dioxide sorbing material and the volume (Vs) of the solvent, i.e. the ratio (V1/Voa) of the volume (Vl) of the liquid containing the carbon dioxide sorbing material to the oil sorptive capacity (Voa) of the porous inorganic particles, will be adjusted to be 0.7 or less. However, it is assumed here that the density of the liquid containing the carbon dioxide sorbing material is 1.0 g/mL.

Incidentally, shown in the following equation, the oil sorptive capacity Voa (mL) of the porous inorganic particles is a capacity obtained by multiplying an oil sorption amount (mL/g) per 1 g of porous inorganic particles converted from the oil sorption amount Vo (mL/100 g) of the porous inorganic particles by the mass M (g) of the porous inorganic particle.

$$Voa \ (mL) = Vo \ (mL \ /100 \ g) \ / \ 100 \ \times M \ (g)$$

The oil sorption amount Vo (mL /100 g) of the porous inorganic particles represents the volume (mL) of the total $(V_1+V_2+V_3)$ of the pore volume $(V_1)$ inside the primary particle forming the porous inorganic particle, the void volume $(V_2)$ between the adjacent primary particles, and the minimum volume $(V_3)$ at which the surface of the secondary particles can wet the oil, per 100g of the porous inorganic particles. On the other hand, if a liquid containing a carbon dioxide sorbing material is dropped to the total $(V_1+V_2+V_3)$, not all of the carbon dioxide sorbing material can be supported within the porous inorganic particles. In that case, the total volume $(V_1 + V_2)$ of the pore volume $(V_1)$ inside the primary particle and the void volume $(V_2)$ between the primary particles will exceed 70% of the oil sorptive capacity Voa as shown by the following formula.

$$0.7 < (V_1 + V_2) \ / \ Voa < 1.0$$

Therefore, in the instant embodiment, the liquid containing the carbon dioxide sorbing material is blended into the porous inorganic particles in such a manner that the ratio (Vl /Voa) of the volume (Vl) of the liquid relative to the oil sorptive capacity (Voa) of the porous inorganic particles is 0.7 or less.

In the above, the liquid containing a carbon dioxide sorbing material may be blended with the porous inorganic particles at atmospheric pressure, or if the inside of the pores of the porous inorganic particles is evacuated by depressurization, it becomes possible to increase the sorption rate of the liquid containing the carbon dioxide sorbing material to the porous inorganic particles.

The stirring rate of the porous inorganic particles and the dropping time of the liquid containing the carbon dioxide sorbing material may be appropriately adjusted.

Thereafter, when the liquid contains a solvent (that is, when the liquid is a solution), the solvent will be removed under the conditions of either room temperature and/or heating, or the atmospheric pressure and/or reduced pressure. With this, the carbon dioxide sorbing material will be incorporated into the pores of the porous inorganic particles.

Also, in the above case, if only a liquid containing less than 30% by mass of carbon dioxide sorbing material can be obtained, a desired amount of carbon dioxide sorbing material can be incorporated into porous inorganic particles by performing step (1) for a plurality of rounds. Specifically, in the first round, a liquid containing a carbon dioxide sorbing material is blended with porous inorganic particles, then the solvent is removed. Then, in the second round, a liquid containing a carbon dioxide sorbing material is further added to the porous inorganic particles blended in the first round which incorporated the carbon dioxide sorbing material, and then the solvent is removed. In the third round and rounds subsequent thereto, these operations will be repeated.

In the above, in the second round, the liquid of the second round is added to the porous inorganic particles in such a manner that a total volume: $Vf_1 + Vl_2$ of a volume $Vf_1$ of the carbon dioxide sorbing material taken into the porous inorganic particles in the first round and a volume $Vl_2$ of the liquid to be blended in the second round will range 0.7 or less relative to the the oil sorptive volume Voa of the porous inorganic particles. The third and subsequent rounds will be conducted in the same as above.

That is, in the n-th round, the liquid of the n-th round will be added to the porous inorganic particles in such a manner that a total volume: $Vf_1 + Vf_2... + Vf_{n-1} + Vln \ (= \sum V f_{n-1} + Vl)$ of the total volume: $Vf_1 + Vf_2... + Vf_{n-1} \ (= \sum V f_{n-1})$ of the carbon dioxide sorbing material which has been taken up in the porous inorganic particles to the n-1st round and the volume: $V1n \ (=Vf_n+V_S)$ of the liquid to be blended in the n-th round will range 0.7 or less, relative to the the oil sorptive volume Voa of the porous inorganic particles.

At the next step (2), the vinyl monomer solution of the curable resin is incorporated into the pores of the porous inorganic particles which have incorporated the carbon dioxide sorbing material in the pores thereof.

While stirring the porous inorganic particles obtained at step (1), the vinyl monomer solution of the curable resin is dropped onto the porous inorganic particles. The stirring rate of the porous inorganic particles and the dropping time of the vinyl monomer solution may be appropriately adjusted.

To the vinyl monomer solution of the curable resin, a polymerization initiator is added before dropping onto the porous inorganic particles. The polymerization initiator is a radical polymerization initiator that acts as an initiator in the radical polymerization (vinyl polymerization) of step (3) described below. Examples of the polymerization initiator include a thermal polymerization initiator and a photopolymerization initiator. Specifically, examples of the thermal polymerization initiator include peroxy compounds such as acetylacetone peroxide, methyl ethyl ketone peroxide, diethyl ketone peroxide, methyl propyl ketone peroxide, methyl isobutyl ketone peroxide, methyl acetoacetate peroxide, ethyl acetoacetate peroxide, cyclohexanone peroxide, methylcyclohexanone peroxide, 3,3,5-trimethyl cyclohexanone peroxide, cumene peroxide, benzoyl peroxide, t-butyl isopropyl peroxy carbonate, 1,1-dibutyl peroxy-3,3,5 -trimethyl cyclohexanone, t-butyl peroxy-2-ethyl hexanoate, amyl peroxy-p-2-ethyl hexanoate, 2-ethylhexylperoxy-2-ethylhexanoate, t-butylperoxybenzoate, t-hexyl peroxybenzoate, etc. Preferably, it is methyl ethyl ketone peroxide. As an example of the photopolymerization initiator, a benzoin derivative can be cited. These polymerization initiators can be used alone or in combination of two or more.

The mixing ratio of the polymerization initiator is e.g. 0.1 parts by mass or more, preferably 0.3 parts by mass or more, and e.g. 5 parts by mass or less, preferably, 3 parts by mass or less, relative to 100 parts by mass of the curable resin vinyl monomer solution.

In the instant embodiment, when the vinyl monomer solution of the curable resin is an unsaturated polyester resin, a formulation of mixing 1% of 55% methylethyl peroxide to the vinyl monomer solution will be used as the standard formulation.

Then, the vinyl monomer solution of the curable resin is incorporated into the pores of the porous inorganic particles. Specifically, for example, a vinyl monomer solution of a curable resin mixed with a polymerization initiator is dropped while stirring a closed vessel equipped with a stirrer charged with the porous inorganic particles obtained from step (1). In this, the vinyl monomer solution of the curable resin may be dropped onto the porous inorganic particles at atmospheric pressure, or if the interior of the pores of the porous inorganic particles is kept in a vacuum state under reduced pressure, it is possible to increase the sorption rate of the vinyl monomer solution to the porous inorganic particles.

Subsequently, at step (3), the vinyl monomer solution of the curable resin incorporated in the pores of the porous inorganic particles is cured. If the vinyl monomer solution of the curable resin is a room temperature curable unsaturated polyester resin (room temperature curable unsaturated polyester vinyl monomer solution), it will be cured at room temperature (25°C) for 24 hours or more. In order to shorten the curing time, it is also possible to completely cure it by allowing it to stand at room temperature (25°C), for example, after 5 hours or more and then from 40°C to 60°C for 5 hours or more.

On the other hand, a vinyl monomer solution of a curable resin containing a photopolymerization initiator such as a benzoin derivative can be cured by irradiation with ultraviolet rays or an electron beam, for example. Particularly, in case where the porous inorganic particles are composed of silica, since ultraviolet transmittance of silica is high, ultraviolet curing can be suitably performed.

The aforementioned curing proceeds by vinyl copolymerization (radical copolymerization) of the vinyl group of the vinyl monomer and the unsaturated double bond of the curable resin. In the porous inorganic particles, the carbon dioxide sorbing material is sealed by the cured resin.

At step (1), the ratio of the liquid containing the carbon dioxide sorbing material to the oil sorptive capacity (Voa) of the porous inorganic particles is e.g. 0.4 or more, preferably 0.5 or more, and preferably 0.7 or less.

At step (2), the ratio $((Vf + Vr) / Voa)$ of the volume of the carbon dioxide sorbing material and the total volume of the resin $(Vf + Vr)$ to the oil sorptive capacity (Voa) of the porous inorganic particles is adjusted to 0.7 or less. Namely, the mixing is effected so as to satisfy the following formula. However, it is assumed here that the density of the vinyl monomer solution of the carbon dioxide sorbing material and the curable resin is 1.0 g/mL.

$$(Vf + Vr) \, /Voa \leq 0.7$$

Here, when the ratio $(Vf + Vr)/Voa$ exceeds 0.7, the vinyl monomer solution will not be entirely taken into the pores of the porous inorganic particles and the excessive vinyl monomer solution will adhere to the surface of the porous inorganic particles, so there is a possibility of agglomeration of the porous inorganic particles, resulting in production of lumpy cured product. In other words, when $(Vf + Vr) / Voa$ is 0.7 or less, adhesion or bonding of mutually adjacent porous inorganic particles will be prevented, and the plurality of porous inorganic particles have excellent fluidity (smooth flowing) can be secured.

Further, $(Vf + Vr) / Voa$ is e.g. 0.45 or more, preferably more than 0.45, more preferably 0.5 or more, even more preferably more than 0.5, still more preferably 0.6 or more .

If $(Vf + Vr) / Voa$ exceeds the lower limit described above, the carbon dioxide sorbing material and the resin can be contained in a sufficient amount with respect to the porous inorganic particles.

The ratio $(Vr / Voa)$ of the volume (Vr) of the resin to the oil sorptive capacity (Voa) of the porous inorganic particles is e.g. 0.15 or more, preferably 0.2 or more, more preferably 0.3 or more, and e.g. 0.6 or less.

When Vr / Voa is equal to or more than the above-mentioned lower limit, the porous inorganic particles can take in a sufficient amount of resin, thereby reliably sealing the carbon dioxide sorbing material in the pores of the porous inorganic particles. On the other hand, in Patent Document 1, since the organic solvent in the organic solvent solution is removed, Vr / Voa is less than the lower limit of the above range.

In addition, the ratio (mass of the carbon dioxide sorbing material / mass of the vinyl monomer solution, namely, the mass of the carbon dioxide sorbing material / the mass of the resin) of the mass of the carbon dioxide sorbing material sorbed at step (1) to the mass of the curable resin vinyl monomer solution (i.e. the mass of the resin) is e.g. 2.0 or less, preferably 1.5 or less, more preferably 1.0 or less, further preferably 0.5 or less, and e.g. 0.01 or more, preferably 0.1 or more.

When the mass ratio of the carbon dioxide sorbing material is not more than the above upper limit, the carbon dioxide sorbing material will be reliably sealed in the pores of the porous inorganic particle with a sufficient amount of resin. Thus leakage of the carbon dioxide sorbing material from the pores of the porous inorganic particles can be suppressed.

Further, the ratio of the total mass of the carbon dioxide sorbing material and the vinyl monomer solution (resin) of the curable resin to the mass of the porous inorganic particles (the total mass of the carbon dioxide sorbing material and the vinyl monomer solution (resin) of the curable resin / the mass of the porous inorganic particles) is e.g. 1.3 or more, preferably 1.5 or more, more preferably 1.7 or more, and e.g. 2.5 or less.

If the ratio of the total mass of the carbon dioxide sorbing material and the vinyl monomer solution (resin) is not less than the above-mentioned lower limit, depending on the purpose, the carbon dioxide sorbent can contain sufficient amounts of carbon dioxide sorbing material and resin.

**(Application)**

The carbon dioxide sorbent of the present embodiment sorbs carbon dioxide with the carbon dioxide sorbing material incorporated in numerous pores in the porous inorganic particles, so that carbon dioxide can be sorbed very efficiently. Moreover, since the carbon dioxide sorbent of this embodiment is a solid, it is easy to handle as compared with a liquid one. Therefore, it is also possible to apply the carbon dioxide sorbent of the present embodiment to e.g. a carbon dioxide separation recovery apparatus installed in a large-scale facility such as a thermal power plant, etc., so that an operation of carbon dioxide separation and recovery work can be carried out in an efficient manner.

Incidentally, the embodiment disclosed in the present description is an example, and the embodiment of the present invention is not limited thereto, but can be appropriately modified within a scope not deviating from the object of the present invention.

**(Example 1)**

**(Carbon dioxide sorbent using tetraethylphosphonium benzimidazolide)**

Next, an example of a method for producing the carbon dioxide sorbent according to the above embodiment will be described.

In a separable flask, 40 parts by weight of porous silica having an average particle size of 1.4 $\mu$m and a specific surface area of 300 m$^2$/g (Sylysia 310 manufactured by Fuji Silysia Chemical Co., Ltd.) was charged.

Separately from the above, 400 parts by weight of tetraethylphosphonium benzimidazolide, which is a carbon dioxide sorbing material, was dissolved in 100 parts by weight of methyl ethyl ketone as a substance to be supported was prepared.

Further, an unsaturated polyester resin having a viscosity of 52 mPa $\cdot$ S and a curing resin ratio of 48.2 wt% was prepared.

While depressurizing the interior of the separable flask, a solution of the carbon dioxide sorbing material prepared previously was added, sufficiently penetrated into the porous silica, and then stirred for 30 minutes to return to the atmospheric pressure. While heating the interior of the separable flask to 60 °C, the pressure was reduced and methyl ethyl ketone was evaporated and separated. Thereafter, the pressure was returned to atmospheric pressure.

Subsequently, 20 parts by weight of the unsaturated polyester resin and 0.2 parts by weight of a crosslinking agent (methylethylperoxide 55% dimethyl phthalate solution, manufactured by NOF CORPORATION) were placed in a separable flask, stirred for 1 hour and then stirred for 12 hours or more to allow the unsaturated polyester resin to be completely cured. With this, a carbon dioxide sorbent surface-protected with polyester resin was obtained.

The carbon dioxide sorption amount was evaluated by using the carbon dioxide sorbent carrying tetraethylphosphonium benzimidazolide prepared by the above production method as a sample. For the evaluation, a thermogravimetric analyzer TG-DTA (TG-DTA 7300 manufactured by Hitachi High-Tech Science Co., Ltd.) was used. 10 mg of the sample was weighed in an aluminum pan and kept for 3 hours in a state where nitrogen gas (purity of 99.9999% or more) was circulated at a temperature of 70 °C, and 300 mL/min [pretreatment step]. Then, at the same temperature at 90°C, it was switched to 300 mL/min of a mixed gas of carbon dioxide 14%: nitrogen 86% and left for 1 hour [sorption step]. In this, sorption of 0.0546 g of carbon dioxide per 1 g of unsorbed sample after pretreatment was confirmed.

**(Example 2)**

**(Carbon dioxide sorbent using tetraethylammonium benzimidazolide)**

Next, an example of a method for producing the carbon dioxide sorbent according to the above embodiment will be described.

In a separable flask, 40 parts by weight of porous silica having an average particle size of 1.4 $\mu$m and a specific surface area of 300 $m^2$/g (Sylysia 310 manufactured by Fuji Silysia Chemical Co., Ltd.) was added.

Separately from the above, 400 parts by weight of tetraethylammonium benzimidazolide which is a carbon dioxide sorbing material as a substance to be supported was dissolved in 100 parts by weight of methyl ethyl ketone was prepared.

Further, an unsaturated polyester resin having a viscosity of 52 mPa · S and a curing resin ratio of 48.2 wt% was prepared.

While depressurizing the interior of the separable flask, a solution of the carbon dioxide sorbing material prepared previously was added, sufficiently penetrated into the porous silica, and then stirred for 30 minutes to return to the atmospheric pressure. While heating the interior of the separable flask to 60 °C, the pressure was reduced and methyl ethyl ketone was evaporated and separated. Thereafter, the pressure was returned to the atmospheric pressure.

Subsequently, 20 parts by weight of the unsaturated polyester resin and 0.2 parts by weight of a crosslinking agent (methylethylperoxide 55% dimethyl phthalate solution, manufactured by NOF CORPORATION) were placed in a separable flask, stirred for 1 hour and then stirred for 12 hours or more to allow the unsaturated polyester resin to be completely cured. With this, a carbon dioxide sorbent surface-protected with a polyester resin was obtained.

The carbon dioxide sorption amount was evaluated by using the carbon dioxide sorbent carrying tetraethylammonium benzimidazolide prepared by the above production method as a sample. For the evaluation, a thermogravimetric analyzer TG-DTA (TG-DTA 7300 manufactured by Hitachi High-Tech Science Co., Ltd.) was used. 10 mg of the sample was weighed in an aluminum pan and kept for 3 hours in a state where nitrogen gas (purity of 99.9999% or more) was circulated at a temperature of 70 °C and 300 mL/min [pretreatment step]. Then, at the same temperature of 70 °C, it was switched to 300 mL/min of a mixed gas of carbon dioxide 14%: nitrogen 86% and left for 1 hour [sorption step]. In this, sorption of 0.0586 g of carbon dioxide was confirmed per 1 g of unsorbed sample after pretreatment.

**Industrial applicability**

The present invention can be suitably used in the field of technology for reducing carbon dioxide emissions.

**Claims**

1. A carbon dioxide sorbent wherein carbon dioxide sorbing material incorporated in pores of the porous inorganic particles is sealed in the pores with a resin.

2. The carbon dioxide sorbent of claim 1, wherein the carbon dioxide sorbing material is an ionic liquid.

3. The carbon dioxide sorbent of claim 2, wherein the ionic liquid is tetraethylphosphonium benzimidazolide or tetraethylammonium imidazolide.

4. The carbon dioxide sorbent of any one of claims 1-3, wherein the resin is a cured product obtained by curing a vinyl monomer solution of a curable resin.

5. The carbon dioxide sorbent of claim 4, wherein the vinyl monomer solution is at least one selected from the group consisting of an unsaturated polyester resin, an epoxy acrylate resin, and a urethane acrylate resin.

6. The carbon dioxide sorbent of claim 5, wherein the vinyl monomer solution is an unsaturated polyester resin.

7. The carbon dioxide sorbent of any one of claims 4-6, wherein the ratio of the volume of the resin to the oil sorptive capacity of the porous inorganic particle is 0.3 or more.

8.  The carbon dioxide sorbent of any one of claims 4-7, wherein the ratio of the total volume of the carbon dioxide sorbing material and the resin to the oil sorptive capacity of the porous inorganic particle is 0.7 or less.

9.  The carbon dioxide sorbent of any one of claims 4-8, wherein the ratio of the total volume of the carbon dioxide sorbing material and the resin to the oil sorptive capacity of the porous inorganic particles exceeds 0.5.

10. The carbon dioxide of any one of claims 4-9, wherein the ratio of the total mass of the carbon dioxide sorbing material and the resin to the mass of the porous inorganic particle is 1.5 or more.

11. The carbon dioxide sorbent of any one of claims 4-10, wherein the ratio of the mass of the carbon dioxide sorbing material to the mass of the resin is 2.0 or less.

12. The carbon dioxide sorbent according to claim 1, wherein the carbon dioxide sorbing material is a water insoluble component.

13. The carbon dioxide sorbent according to claim 1, wherein the carbon dioxide-sorbing material is a water-soluble component.

14. A method for producing a carbon dioxide sorbent comprising the steps of: incorporating a carbon dioxide sorbing material into pores of porous inorganic particles; and sealing the carbon dioxide sorbing material in the pores with a resin .

15. The method for producing a carbon dioxide sorbent of claim 14, wherein the carbon dioxide sorbing material is an ionic liquid.

16. The method for producing a carbon dioxide sorbent of claim 15, wherein the ionic liquid is tetraethylphosphonium benzimidazolide or tetraethylammonium imidazolide.

17. The The method for producing a carbon dioxide sorbent of any one of claims 14-16, comprising the steps of:

    blending a liquid containing the carbon dioxide sorbing material to the porous inorganic particles in such a manner that the ratio of the volume of the liquid relative to the oil sorptive capacity of the porous inorganic particles is 0.7 or less, thus incorporating the carbon dioxide sorbing material within pores of the porous inorganic particles;
    blending a vinyl monomer solution of a curable resin as the resin to the porous inorganic particles in such a manner the ratio of the total volume of the carbon dioxide sorbing material and the vinyl monomer solution to the oil sorptive capacity of the porous inorganic particles is 0.7 or less, thus incorporating the vinyl monomer solution within the pores of the porous inorganic particles; and
    curing the vinyl monomer solution to seal the carbon dioxide sorbing material in the pores.

18. The method for producing a carbon dioxide sorbent of claim 17, wherein the viscosity of the vinyl monomer solution at 23 °C is 100 mPa · s or less.

19. The method for producing a carbon dioxide sorbent of claim 17 or 18, wherein:

    the vinyl monomer solution of the curable resin is a thermosetting resin composition; and
    the thermosetting resin composition has a room temperature gelling time of 10 minutes or more as measured according to JIS K 6901-A method (2008).

20. The method for producing a carbon dioxide sorbent of any one of claims 17-19, wherein:

    the vinyl monomer solution of the curable resin is a thermosetting resin composition; and
    the room temperature gelling time measured according to JIS K 6901-A method (2008) is 1 hour or less.

<table>
<tr><td colspan="2" align="center">**INTERNATIONAL SEARCH REPORT**</td><td>International application No.<br>PCT/JP2017/009813</td></tr>
</table>

A. CLASSIFICATION OF SUBJECT MATTER
*B01J20/22*(2006.01)i, *B01D53/14*(2006.01)i, *B01D53/62*(2006.01)i, *B01D53/81*
(2006.01)i, *C08F283/01*(2006.01)i

According to International Patent Classification (IPC) or to both national classification and IPC

B. FIELDS SEARCHED

Minimum documentation searched (classification system followed by classification symbols)
B01J20/22, B01D53/14, B01D53/62, B01D53/81, C08F283/01

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-133219 A  (NGK Insulators, Ltd.),<br>24 July 2014 (24.07.2014),<br>claims; paragraphs [0016] to [0019], [0023] to<br>[0024], [0031]; examples<br>(Family: none) | 1-2,12-15<br>3-11,16-20 |
| Y | WO 2015/069799 A1  (UNIVERSITY OF NOTRE DAME DU<br>LAC),<br>14 May 2015 (14.05.2015),<br>claims; paragraphs [0004] to [0018]<br>& US 2016/0288051 A1 | 3-11,16-20 |
| Y | JP 2009-12996 A  (Enex Co., Ltd.),<br>22 January 2009 (22.01.2009),<br>claims; paragraphs [0019] to [0026]; examples<br>(Family: none) | 4-11,17-20 |

| ☒ Further documents are listed in the continuation of Box C. | ☐ See patent family annex. |
|---|---|

\*    Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    02 May 2017 (02.05.17) | Date of mailing of the international search report<br>    23 May 2017 (23.05.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/009813

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-265508 A  (Showa Denko Kabushiki Kaisha), 06 October 1998 (06.10.1998), claims; paragraphs [0039], [0054], [0065], [0075] to [0076]; examples (Family: none) | 4-11,17-20 |
| Y | JP 2002-512286 A  (The Dow Chemical Co.), 23 April 2002 (23.04.2002), claims; paragraphs [0024] to [0028] & US 6287992 B1        & WO 1999/054393 A1 claims; page 5, line 31 to page 7, line 11 & EP 1088024 A1        & CN 1298424 A | 4-11,17-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009012996 A